# EUROPEAN PATENT APPLICATION

(11) **EP 3 241 688 A1**
(43) Date of publication of application: **08.11.2017**
(21) Application number: 17169616.4
(22) Date of filing: 05.05.2017
(51) Int. Cl.: B60B 27/00, B60B 27/02, F16D 65/18, B60B 1/04, F16D 55/00, F16D 65/02, F16D 121/04

(54) **WHEEL HUB FOR A VEHICLE AND BRAKING SYSTEM THEREFOR**

(30) Priority: 05.05.2016 AU 2016901655
(71) Applicant: Ventum LLC, Miami Beach, Florida 33139 (US)
(72) Inventor: SEEAR, Peter Kenneth, Brookfield, Queensland 4069 (AU)
(74) Representative: Lavoix

(57) **Abstract**

The present invention provides a wheel hub (100) for a vehicle, including a wheel axle (110) defining an axis of rotation for the wheel, a hub body (120) rotatably coupled to the axle for rotation about the axis of rotation, the hub body defining an internal cavity (125), and a braking assembly. The braking assembly includes: i) at least one first annular plate (130) disposed within the internal cavity about the axle, the at least one first annular plate rotatably fixed with respect to the hub body so as to rotate therewith about the axis of rotation; ii) at least one second annular plate (140) disposed within the internal cavity about the axle and adjacent to the at least one first annular plate, the at least one second annular plate rotatably fixed with respect to the axle, and at least one of the first and second annular plates being slidably movable within at least part of the internal cavity; and, iii) an actuator (150) disposed within the internal cavity and configured in use, to cause an axial load to be applied to the slidably movable plate to thereby cause the at least one first and second annular plates to frictionally engage thereby applying a braking load between the hub body and wheel axle so as to brake the wheel of the vehicle.

## Description

### Priority Documents

The present application claims priority from Australian Provisional Patent Application No. 2016901655 titled "WHEEL HUB FOR A VEHICLE AND BRAKING SYSTEM THEREFOR" and filed on 5 May 2016, the contents of which are hereby incorporated by reference in their entirety.

### Background of the Invention

The present invention relates to a wheel hub for a vehicle and braking system therefor, and in one example, to a wheel hub and braking system for a bicycle or motorcycle.

### Description of the Prior Art

The reference in this specification to any prior publication (or information derived from it), or to any matter which is known, is not, and should not be taken as an acknowledgment or admission or any form of suggestion that the prior publication (or information derived from it) or known matter forms part of the common general knowledge in the field of endeavour to which this specification relates.

Whilst the below discussion focusses on cycling and the braking of bicycles, this is for convenience only and it is to be understood that other forms of vehicles are also contemplated, including motorcycles and the like.

Bicycles are typically fitted with either rim brakes or disc brakes.

Rim brakes employ a pair of friction pads located either side of a wheel rim that are operable to clamp the rim of the rotating wheel to apply a braking force thereto. Rim brakes are typically cable actuated by a rider squeezing a brake lever attached to the handlebars of the bike which causes the brake caliper arms connected to the brake shoes to move together so that the pads squeeze the rim. Rim brakes tend to be lightweight and relatively inexpensive; however performance in the wet can be poor as the brake components and rim are exposed to the environment. In addition, the braking surface on the rims can wear which can lead to rim failure if not properly maintained. Due to positioning of the brake caliper typically above the front fork, the aerodynamic performance of the bicycle is often compromised by the use of rim brakes.

Discs brakes employ a rotor disc attached externally to the wheel hub that rotates with the wheel. Brake calipers are mounted to the frame or fork which include pads that are designed to frictionally engage with the rotor disc to thereby brake the wheel. Disc brakes offer a number of potential advantages over rim brakes including increased stopping power, modulation, control and performance in wet weather. The world governing body for sports cycling, the Union Cycliste Internationale (UCI), allowed disc brakes to be trialled by professional road racing teams in 2016. However, in recent races, riders have sustained serious injuries resulting from the rotor discs, which typically have a sharp edge. These injuries have included serious lacerations to limbs as a result of riders crashing and being sliced by the spinning rotors attached to the bikes of other riders.

There is therefore a serious concern about rider safety when disc brakes are used in professional road cycling, in which riders typically ride in tightly bunched groups and crashes frequently occur. In addition to the risk of being cut by the rotor disc, another risk with exposed rotors is that due to the heat dissipated during braking, the disc can get very hot which can lead to burns if accidentally touched.

As with rim brakes, the brake caliper used for disc brakes typically impedes the aerodynamic performance of the bicycle, due to its position in the flow path.

It is against this background, and the problems and difficulties associated therewith, that the present invention has been developed.

### Summary of the Present Invention

In one broad form, the present invention seeks to provide a wheel hub for a vehicle, including:
a) a wheel axle defining an axis of rotation for the wheel;
b) a hub body rotatably coupled to the axle for rotation about the axis of rotation, the hub body defining an internal cavity; and,
c) a braking assembly, including:
   i) at least one first annular plate disposed within the internal cavity about the axle, the at least one first annular plate rotatably fixed with respect to the hub body so as to rotate therewith about the axis of rotation;
   ii) at least one second annular plate disposed within the internal cavity about the axle and adjacent to the at least one first annular plate, the at least one second annular plate rotatably fixed with respect to the axle, and at least one of the first and second annular plates being slidably movable within at least part of the internal cavity; and,
   iii) an actuator disposed within the internal cavity and configured in use, to cause an axial load to be applied to the slidably movable plate to thereby cause the at least one first and second annular plates to frictionally engage thereby applying a braking load between the hub body and wheel axle so as to brake the wheel of the vehicle.

Typically, the wheel hub includes a plurality of first annular plates interleaved with a plurality of second annular plates that are brought into frictional engagement during braking.

Typically, there are 'n' first annular plates and 'n+1' second annular plates.

Typically, at least one of the plurality of first or second annular plates are separated by one or more biasing members.

Typically, each of the plurality of first annular plates are separated by biasing members and each of the plurality of second annular plates are separated by biasing members.

Typically, the or each biasing member is one of:
a) an O-ring; and,
b) a spring washer.

Typically, the at least one first annular plate has a grooved exterior for cooperation with one of:
a) a splined interior of the hub body; and,
b) a plurality of circumferentially spaced apart slots extending from a first end of the hub body in a direction of elongation thereof.

Typically, the at least one second annular plate has a grooved interior for cooperation with a splined exterior of at least a portion of the axle.

Typically, the actuator is hydraulic.

Typically, the actuator is an annular cylinder and piston arrangement disposed about the axle.

Typically, the axle defines an internal passageway extending from a first end thereof along a direction of elongation of the axle, the passageway providing a conduit for the flow of hydraulic fluid into the cylinder.

Typically, the actuator is a cable operated ball and ramp mechanism.

Typically, the hub body is open permitting the hub to be air cooled so as to dissipate heat generated during braking.

Typically, the hub body is enclosed.

Typically, the hub body is at least partially filled with fluid so as to dissipate heat generated during braking.

Typically, the hub body includes a plurality of cooling fins.

Typically, the wheel hub further includes:
a) an annular flange at a first end of the hub body to which spokes of the wheel are attached; and,
b) an end plate disposed about the axle and removably secured to the annular flange, the end plate removable to provide access to the internal cavity.

Typically, the end plate is seated in a recess provided in the annular flange.

Typically, the wheel hub further includes a third annular plate arranged between the actuator and slidably movable plate, the third annular plate acting as a thermal insulator.

Typically, the third annular plate is made from a ceramic material or alumina.

Typically, the at least one first annular plate is a friction plate providing at least one friction surface made from a metallic, fibrous or organic material.

Typically, the at least one second annular plate is a pressure plate made from a metallic material such as steel.

Typically, the wheel hub is for use with at least one of:
a) a front wheel of the vehicle; and,
b) a rear wheel of the vehicle.

Typically, the vehicle is one of:
a) a bicycle;
b) a tricycle; and,
c) a motorcycle.

In another broad form, the present invention seeks to provide a braking system for a vehicle, the braking system including:
a) a wheel hub, including:
   i) a wheel axle defining an axis of rotation for the wheel;
   ii) a hub body rotatably coupled to the axle for rotation about the axis of rotation, the hub body defining an internal cavity;
   iii) at least one first annular plate disposed within the internal cavity about the axle, the at least one first annular plate rotatably fixed with respect to the hub body so as to rotate therewith about the axis of rotation;
   iv) at least one second annular plate disposed within the internal cavity about the axle and adjacent to the at least one first annular plate, the at least one second annular plate rotatably fixed with respect to the axle, and at least one of the first and second annular plates being slidably movable within at least part of the internal cavity; and,
   v) an actuator disposed within the internal cavity and configured in use, to cause an axial load to be applied to the slidably movable plate to thereby cause the at least one first and second annular plates to frictionally engage thereby applying a braking load between the hub body and wheel axle so as to brake the wheel of the vehicle; and,
b) a brake lever coupled to the actuator and operable by a user to selectively cause the actuator to apply the axial load to the slidably movable plate so as to brake the wheel of the vehicle.

Typically, the actuator includes a ball and ramp mechanism operable by a cable coupled to the brake lever.

Typically, the actuator includes a hydraulic cylinder and piston arrangement coupled to the brake lever by a hydraulic line.

Typically, the hydraulic line is coupled to the cylinder via the axle, a portion of which is hollowed out from a first end thereby forming a passageway in fluid communication with the cylinder.

It will be appreciated that the broad forms of the invention and their respective features can be used in conjunction, interchangeably and/or independently, and reference to separate broad forms in not intended to be limiting.

### Brief Description of the Drawings

Various examples and embodiments of the present invention will now be described with reference to the accompanying drawings, in which: -
Figure 1 is a schematic sectional view of an example of a wheel hub for a vehicle;
Figure 2 is a schematic sectional view of a wheel incorporating the hub of Figure 1;
Figure 3A is a perspective view of an example of an air-cooled wheel hub;
Figure 3B is a side view of the air-cooled wheel hub of Figure 3A;
Figure 3C is a sectional view of the wheel hub shown in Figure 3B taken through the centre of the hub along A-A and showing an example of a braking assembly;
Figure 3D is a sectional view of the wheel hub shown in Figure 3B taken through the centre of the hub along A-A and showing another example of a braking assembly;
Figure 3E is an exploded perspective view of the wheel hub shown in Figure 3A;
Figure 3F is an exploded perspective view of the braking assembly shown in Figure 3C;
Figure 3G is an exploded perspective view of the braking assembly shown in Figure 3D;
Figure 4A is a perspective view of an example of a liquid cooled wheel hub;
Figure 4B is a side view of the liquid cooled wheel hub of Figure 4A;
Figure 4C is a sectional view of the wheel hub shown in Figure 4B taken through the centre of the hub along B-B and showing an example of a braking assembly;
Figure 4D is a sectional view of the wheel hub shown in Figure 4B taken through the centre of the hub along B-B and showing another example of a braking assembly;
Figure 4E is an exploded perspective view of the wheel hub shown in Figure 4A;
Figures 5A to 5B are sectional views of an example of a wheel hub having a brake assembly, showing the brake released and applied respectively;
Figure 6 is a sectional view of an example of wheel hub having a braking assembly comprising a multi-plate arrangement with six friction surfaces;
Figure 7 is a sectional view of an example of wheel hub having a braking assembly comprising a multi-plate arrangement with four friction surfaces;
Figure 8 is a sectional view of an example of wheel hub having a braking assembly comprising a multi-plate arrangement with two friction surfaces; and,
Figure 9 is an exploded perspective view of an example of a wheel hub with a removable end cap to provide access to an internal cavity of the hub for servicing and maintenance of a braking assembly.

### Detailed Description of the Preferred Embodiments

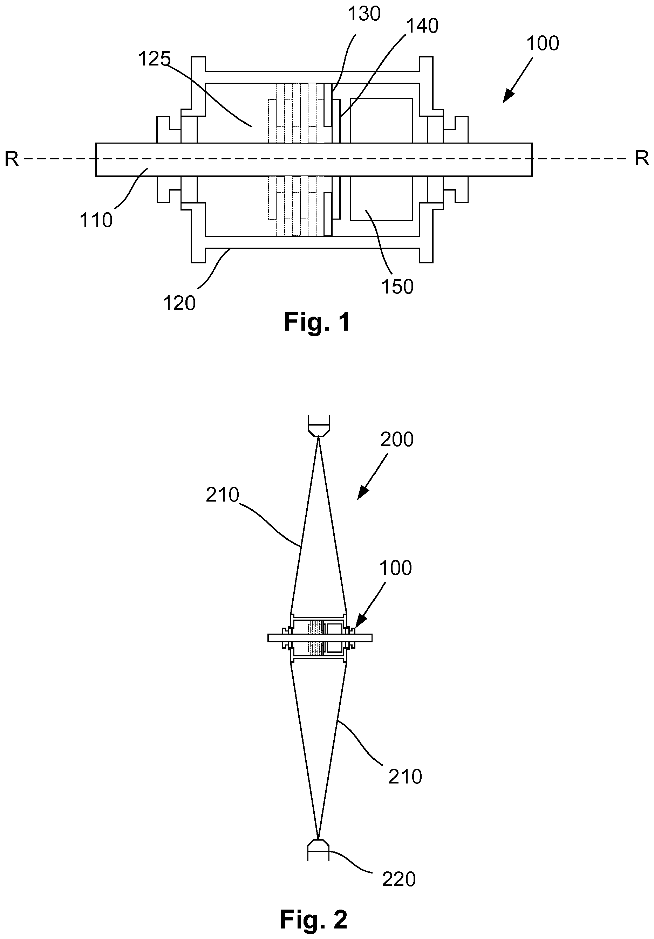

An example of a wheel hub 100 for a vehicle will now be described with reference to Figure 1.

For the purposes of illustration, the wheel hub 100 is depicted as a wheel hub for a bicycle and in Figure 2 there is shown an example of a bicycle wheel 200 having the wheel hub 100 connected to a wheel rim 220 by a plurality of spokes 210 which may be fitted in any conventional manner. It is to be understood however that this is not intended to be limiting, and the wheel hub 100 may be used with vehicles other than bicycles, including for example a motorcycle or tricycle.

In this example, the wheel hub 100 includes a wheel axle 110 defining an axis of rotation R for the wheel. A hub body 120 is rotatably coupled to the axle 110 for rotation about the axis of rotation R. The hub body is substantially hollow defining an internal cavity 125.

The wheel hub 100 further includes a braking assembly including at least one first annular plate 130 disposed within the internal cavity 125 about the axle 110, the at least one first annular plate 130 rotatably fixed with respect to the hub body 120 so as to rotate therewith about the axis of rotation R.

The braking assembly further includes at least one second annular plate 140 disposed within the internal cavity 125 about the axle 110 and adjacent to the at least one first annular plate 130, the at least one second annular plate 140 rotatably fixed with respect to the axle 110, and at least one of the first and second annular plates 130, 140 being slidably movable within at least part of the internal cavity 125.

An actuator 150 is also disposed within the internal cavity 125 and configured in use, to cause an axial load to be applied to the slidably movable plate 130, 140 to thereby cause the at least one first and second annular plates 130, 140 to frictionally engage thereby applying a braking load between the hub body 120 and wheel axle 110 so as to brake the wheel of the vehicle.

The above described arrangement provides a number of advantages.

Firstly, the arrangement provides a braking assembly that is integrated within a wheel hub. The rotating plates or discs in this design are therefore concealed and not exposed like the rotating discs used in modern disc brakes on bicycles. This braking assembly therefore provides a number of safety benefits over disc brakes and mitigates the risk of a rider injuring themselves on exposed discs. As the braking system is contained within the hub, the risk of a rider touching a disc and suffering a burn due to the heat dissipated during braking is also mitigated. This arrangement therefore provides a safer alternative to known disc brakes.

In addition, since the braking assembly is disposed within the hub body, in at least some examples, the internal brake components are not exposed to the environment (including for example water, dirt and dust) meaning that maintenance and cleaning does not need to be performed as regularly as traditional rim and disc brakes. The life of the components is also likely to be increased whilst the brake is likely to provide consistent braking performance in all weather conditions. This is particularly advantageous for mountain biking in wet weather or performing long descents on a road bike in the wet where traditional braking arrangements have sometimes been compromised in their performance due to environmental exposure.

As the entire braking assembly is contained with the hub, no brake calipers are required to be mounted to the fork or frame which improves aerodynamic performance of the bicycle and permits greater aerodynamic design freedom for the front fork. The brake design is therefore particularly advantageous for frames designed to provide maximum aerodynamic performance for the rider.

In contrast to rim brakes, the above described arrangement also improves wheel life by eliminating the brake friction wear on wheel rims which in some cases can lead to catastrophic wheel failure. As the rims are not used in braking, the rim section can be made thinner which can enable the wheel rim to be lighter than rims designed for use with rim brakes.

The above described arrangement may also be retrofitted to existing wheels, by simply replacing an existing hub with a hub and braking assembly as described.

A number of further features will now be described.

Typically, the wheel hub includes a plurality of first annular plates interleaved with a plurality of second annular plates that are brought into frictional engagement during braking. The plurality of first annular plates are typically friction plates that provide one or more braking or friction surfaces made from a metallic, fibrous or organic material. In one example, the friction surface could be a metallic fibrous matrix. The friction surfaces could be bonded to the first annular plates or alternatively the entire plate may be made from the metallic, fibrous or organic friction material. The plurality of second annular plates are pressure plates that are typically metallic. In one example the pressure plates are steel, although in other examples aluminium could be used (including for example an aluminium metal matrix).

In operation, the first and second annular plates are compressed or clamped together thereby generating friction at the friction surfaces between the pressure plates and friction plates. This in turn brakes the rotation of the hub as kinetic energy is transferred into thermal energy. The plate arrangement may vary depending on the braking force and response required. It will be appreciated that this multi-plate braking assembly is able to generate a considerable braking force which is proportional to the number of friction surfaces provided.

Typically, the pressure plates sandwich the friction plates so that there are 'n' first annular plates and 'n+1' second annular plates, however this need not be the case and there could be an even number of each type of annular plate depending on the braking configuration. In one example, four first annular plates are interleaved between 5 second annular plates. Whilst the first and second annular plates are typically arranged so that each first annular plate is sandwiched between two second annular plates, in other examples, first or second annular plates could be grouped together to provide a means of varying the number of friction surfaces in the brake assembly. This will be described in further detail below.

In one example, at least one of the plurality of first or second annular plates are separated by one or more biasing members. The function of the biasing members is to provide a biasing force to the plates so that after the brake is released, the plates are able to move back to their nominal position within the hub with minimal drag. Drag is minimised when each of the plurality of first annular plates are separated by biasing members and each of the plurality of second annular plates are separated by biasing members. Any suitable biasing member may be used, including for example O-rings or spring washers.

The first and second annular plates typically engage with the hub body and axle respectively via splines. In this regard, in one example, the at least one first annular plate has a splined exterior for cooperation with a splined interior of the hub body or a plurality of circumferentially spaced apart slots extending from a first end of the hub body in a direction of elongation thereof. The at least one second annular plate has a splined interior for cooperation with a splined exterior of at least a portion of the axle. The axle spline may be integral with the axle or alternatively the spline may be a separate member sleeved onto the axle. The splined connection between the at least one first annular plate and the hub body enables the at least one first annular plate to freely slide while preventing the at least one first annular plate from rotating relative to the hub body. The splined connection between the at least one second annular plate and the axle enables the at least one second annular plate to freely slide while preventing the at least one second annular plate from rotating relative to the axle. During rotation of the wheel, it will therefore be appreciated that the at least one first annular plate rotates (with the hub) while the at least one second annular plate is stationary (as the axle is a non-rotating member).

Whilst a splined connection could be used to allow the plates to slide whilst preventing rotation with respect to either the axle or hub body, it will be appreciated that other engagement means are possible to allow torque to be transmitted. For example, a keyway or other grooved engagement could be used to couple the first annular plates to the hub body and second annular plates to the axle. In another example, the plates may have grooves that engage with bolts arranged about the hub body or axle. In yet a further example, the interior or exterior of the plates may be shaped in such a way that engagement with the hub body or axle prevents relative rotation thereto.

The actuator used to brake the hub may be hydraulic or mechanical depending on the implementation. In one example, a hydraulic actuator is used comprising an annular cylinder and piston arrangement disposed about the axle. In another example, the actuator may be a cable operated ball and ramp mechanism. Any suitable actuator may be used that is capable of imparting an axial load onto the at least one slidably movable plate to move the plate stack into frictional engagement.

In the case of a hydraulic cylinder and piston actuator, in one example the actuator may define an internal passageway extending from a first end thereof along a direction of elongation of the axle, the passageway providing a conduit for the flow of hydraulic fluid into the cylinder. Hydraulic lines may therefore run from a brake lever or the like (for example attached to the handlebars of a bicycle) down to the axle to allow hydraulic fluid to flow into the cylinder when the brake is applied.

The hub body may be open or enclosed in different examples. In one example, the hub body is open permitting the hub to be air cooled so as to dissipate heat generated during braking. The hub body may have slots or the like about the periphery thereof to allow air to flow into the braking assembly to cool the plates.

In another example the hub body is enclosed and is at least partially filled with fluid so as to dissipate heat generated during braking. Whilst typically hydraulic fluid is used to cool and lubricate the plates, any suitable liquid may be used to transfer heat energy from inside the hub body to outside the hub body. In some arrangements, no fluid may be used and heat may be dissipated by other means, or alternatively not at all depending on the heat load generated during braking. The enclosed hub is generally referred to as a 'wet brake' whereas the open hub is referred to as a 'dry brake'. To further assist heat dissipation and transfer away from the hub, in one example, the hub body may include a plurality of external cooling fins. The 'wet brake' filled with hydraulic fluid provides reliable and consistent braking performance in long downhill applications where significant thermal heat is generated during braking, particularly the front brakes of bicycles.

It will be appreciated that the construction of the hub body will include end flanges to which spokes of the wheel are attached. In one example, the wheel hub includes an annular flange at a first end of the hub body to which spokes of the wheel are attached. An end plate is disposed about the axle and removably secured to the annular flange, the end plate removable to provide access to the internal cavity. In this way, the end plate can be simply removed so that the actuator (e.g. hydraulic cylinder and piston) and plate arrangement can be pulled out of the internal cavity for servicing or replacement. The end plate design permits this to be done without needing the wheel to be dismantled or spokes removed.

Typically, the end plate is seated in a recess provided in the annular flange and screwed thereto.

In one example, the wheel hub further includes a third annular plate arranged between the actuator and slidably movable plate, the third annular plate acting as a thermal insulator or barrier. The third annular plate is typically made from a ceramic material or alumina and may be in the form of a washer. The purpose of the third annular plate is to prevent heat transfer from the friction plates to the hydraulic cylinder. This reduces the risk of damage to the piston and cylinder seals and also prevents the hydraulic fluid from boiling by minimising heat transfer thereto.

The wheel hub as previously described may be used with either a front or rear wheel of a vehicle (or both). As previously mentioned, the hub may be used with any suitable vehicle, including in particular a bicycle, tricycle or motorcycle.

In another broad form, there is provided a braking system for a vehicle, the braking system including a wheel hub including a wheel axle defining an axis of rotation for the wheel and a hub body rotatably coupled to the axle for rotation about the axis of rotation, the hub body defining an internal cavity. The braking system further includes at least one first annular plate disposed within the internal cavity about the axle, the at least one first annular plate rotatably fixed with respect to the hub body so as to rotate therewith about the axis of rotation. At least one second annular plate is also disposed within the internal cavity about the axle and adjacent to the at least one first annular plate, the at least one second annular plate rotatably fixed with respect to the axle, and at least one of the first and second annular plates being slidably movable within at least part of the internal cavity. The braking system also includes an actuator disposed within the internal cavity and configured in use, to cause an axial load to be applied to the slidably movable plate to thereby cause the at least one first and second annular plates to frictionally engage thereby applying a braking load between the hub body and wheel axle so as to brake the wheel of the vehicle. A brake lever is coupled to the actuator and operable by a user to selectively cause the actuator to apply the axial load to the slidably movable plate so as to brake the wheel of the vehicle.

As previously mentioned, the actuator may include a ball and ramp mechanism operable by a cable coupled to the brake lever or alternatively a hydraulic cylinder and piston arrangement coupled to the brake lever by a hydraulic line.

In one example, the hydraulic line is coupled to the cylinder via the axle, a portion of which is hollowed out from a first end thereby forming a passageway in fluid communication with the cylinder.

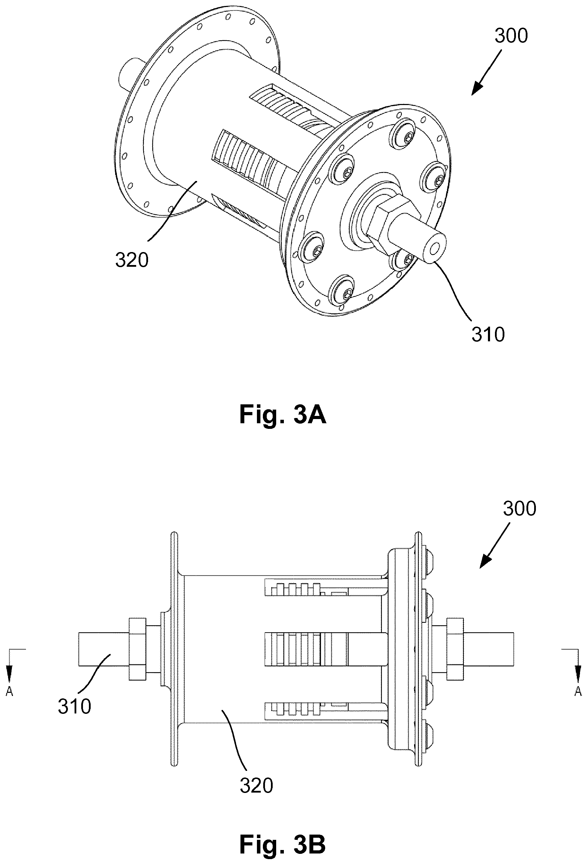

Referring now to Figures 3A to 3G, an example of an air-cooled brake hub 300 will now be described.

In this example, there is shown a wheel hub 300 having a hub body 320 which terminates in end flanges 322, 322' to which spokes of a wheel are attached in a conventional manner. The hub body 320 has a plurality of slots 328 which extend in a direction of elongation of the body 320 from flange 322. The slots 328 are openings which allow air inside the hub body 320 to cool the internal brake components as will be described in further detail below.

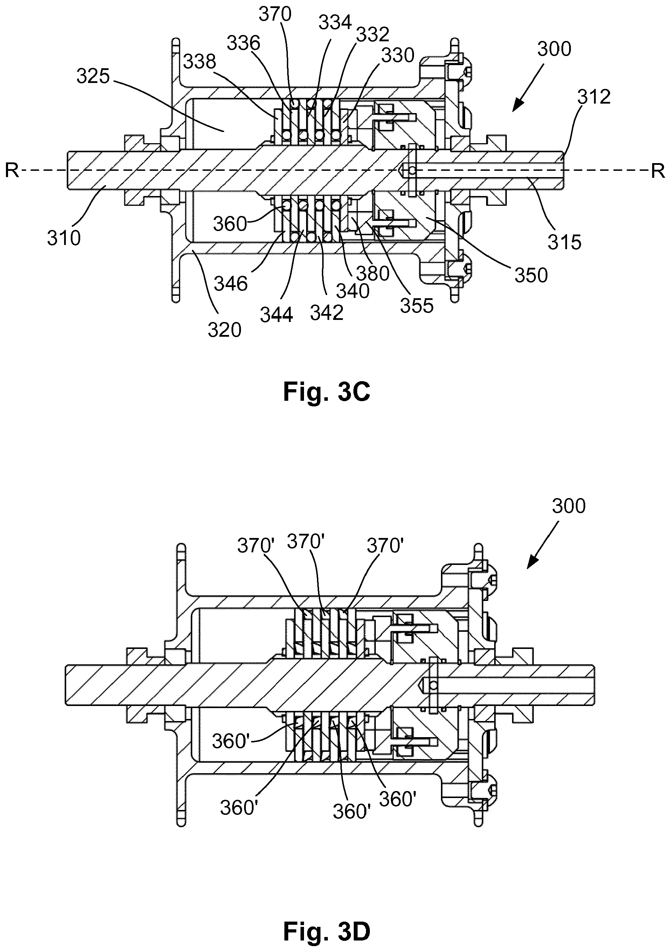

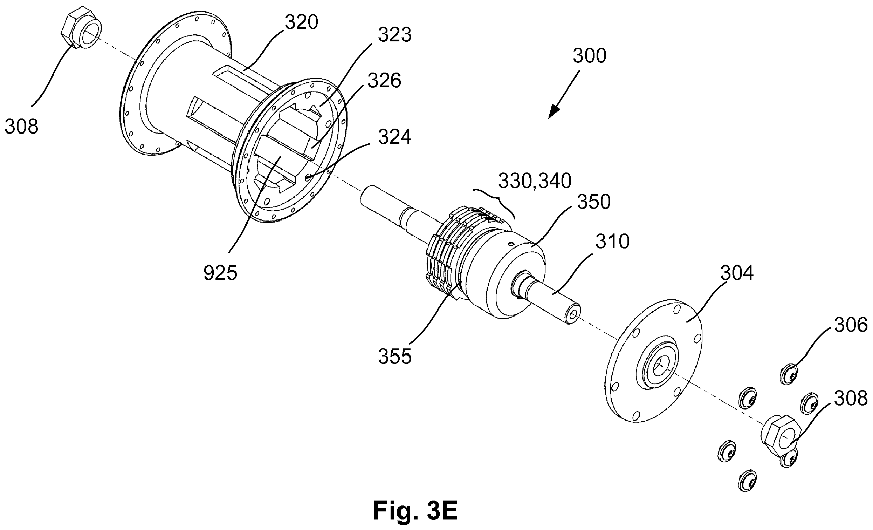

An axle 310 extends through the hub body 320 and defines an axis of rotation R for the wheel. The axle is secured by nuts 308 as shown in Figure 3E. The hub body 320 is rotatably coupled to the axle 310 and is supported by bearings (for example deep groove, doubled sealed) in a conventional manner. A multi-plate brake assembly is located inside a cavity 325 in the hub body 320 about the axle 310 as shown for example in Figure 3C. The multi-plate brake assembly comprises a plurality of friction plates 330, 332, 334, 336 interleaved between a plurality of pressure plates 340, 342, 344, 346, 348. The pressure plates are typically made from a metal such as steel (e.g. mild steel) or aluminium whilst the friction plates are typically a metallic, fibrous or organic friction material. The friction plates 330, 332, 334, 336 are rotatably fixed with respect to the hub body 320 so as to rotate therewith about the axis of rotation R. In this regard, the friction plates 330, 332, 334, 336 have a splined exterior which engages with an internal spline provided in the hub body 320 at least partially by the plurality of slots 328. The hub body 320 therefore slidably receives the friction plates 330, 332, 334, 336 and allows them to slide freely relative to the hub body 320. In other examples, alternative grooved engagement means may be used to couple the friction plates to the hub body.

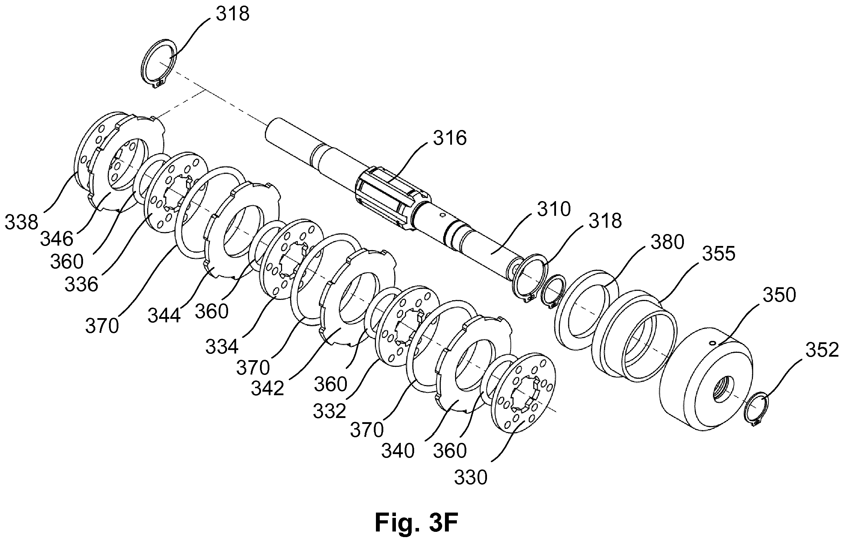

The metallic pressure plates 340, 342, 344, 346, 348 are rotatably fixed with respect to the axle 310. This is achieved by a splined interior of the pressure plates 340, 342, 344, 346, 348 which cooperates with a splined exterior of at least a portion of the axle 310. In the example shown, the axle 310 includes an integral spline section 316 which slidably receives the plurality of pressure plates 340, 342, 344, 346, 348 and allows them to slide freely relative to the axle 310 (see Figure 3F). In normal operation (when not braking) it will therefore be appreciated that the plurality of pressure plates 340, 342, 344, 346, 348 remain stationary whilst the plurality of friction plates 330, 332, 334, 336 rotate with the wheel hub 320 about the axis of rotation R. In other examples, alternative grooved engagement means may be used to couple the pressure plates to the axle.

The wheel hub 300 further includes an actuator in the form of an annular hydraulic cylinder and piston 350, 355 arrangement which is disposed about the axle 310. In use, hydraulic fluid is fed to the cylinder 350 via a passageway 315 formed in the axle 310 from a first end 312 thereof. A hydraulic line or cable (not shown) would be connected to the end 312 of the axle 310 to allow pressurized oil to flow into the cylinder 350 during braking. The cylinder is retained within the internal cavity 325 of the hub body 320 by a circlip 352 as shown in the exploded view of Figure 3F which provides a reaction shoulder for the cylinder.

In operation, the annular piston 355 is movable within the cylinder to apply an axial load onto the multi-plate arrangement via a thermal insulator or barrier 380 in the form of a ceramic or alumina washer which assists in preventing heat transfer from the friction plates 330, 332, 334, 336 to the hydraulic cylinder 350. The ceramic or alumina washer 380 is urged across into the first pressure plate 330, which exerts a force onto first friction plate 340 and so on until the final friction plate 336 is urged towards the final pressure plate 348. Pressure plate 348 is restrained from moving during braking by a circlip or other end stop 318. As a result, the multi-plate arrangement is squeezed or compressed together to thereby bring the plates into frictional engagement. In the arrangement shown, eight friction surfaces are provided, each one respectively being at an interface between a pressure plate and a friction plate.

The frictional engagement between the plates generates friction and thereby converts kinetic energy of the friction plates 330, 332, 334, 336 into thermal or heat energy thereby braking the hub 300 and decelerating the wheel to which it is attached.

In Figure 3C (and shown exploded in Figure 3F), there is shown an example whereby each frictional plate 330, 332, 334, 336 is separated by an O-ring 370 and each pressure plate 340, 342, 344, 346, 348 is also separated by an O-ring 360. The O-rings 360, 370 provide a biasing force between the respective plates which keep them separated when the brake is released in normal operation. When the brake is applied, the respective plates are squeezed together and without any biasing members, when the brake is released, drag would slow the movement of the plates back across to their normal positions. This type of braking response is not desirable and the O-rings are therefore intended to provide sufficient biasing force to spring the plates quickly back across to their normal position after the brake is released.

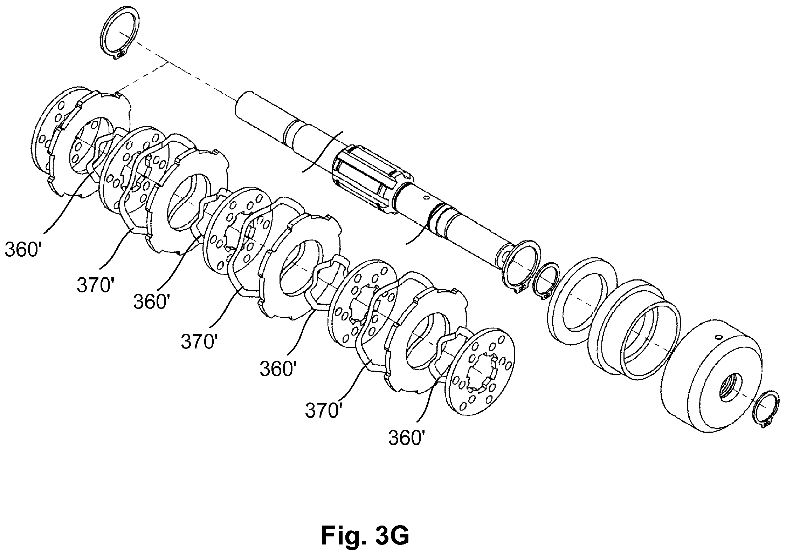

As an alternative example, instead of O-rings, the brake assembly may employ spring washers (such as wave washers). An example of an arrangement where wave washers is used is shown in Figure 3D and exploded in Figure 3G. Spring washers 360' separate the pressure plates 340, 342, 344, 346, 348 whilst spring washers 370' separate the friction plates 330, 332, 334, 336.

As shown in Figure 3E, the hub 300 further includes a removable end plate 304 which is seated in recess 323 formed between the hub body 320 and flange 322. The end plate 304 is secured to the hub body 320 by fasteners 306 (e.g. screw and washer). This arrangement permits the end plate 304 to be removed from the hub body 320 to provide access to the hydraulic cylinder and piston 350, 355 as well as the various pressure and friction plates. This enables servicing to be performed on the brake assembly without having to dismantle the wheel or remove the spokes. The length of the fasteners 306 may be varied so as to extend further into the hub body 320 as required in order to stiffen the slotted hub body 320.

While braking, air is able to enter the hub body 320 via the slots 328 to cool the friction plates 330, 332, 334, 336 and dissipate heat therefrom away from the hub 300.

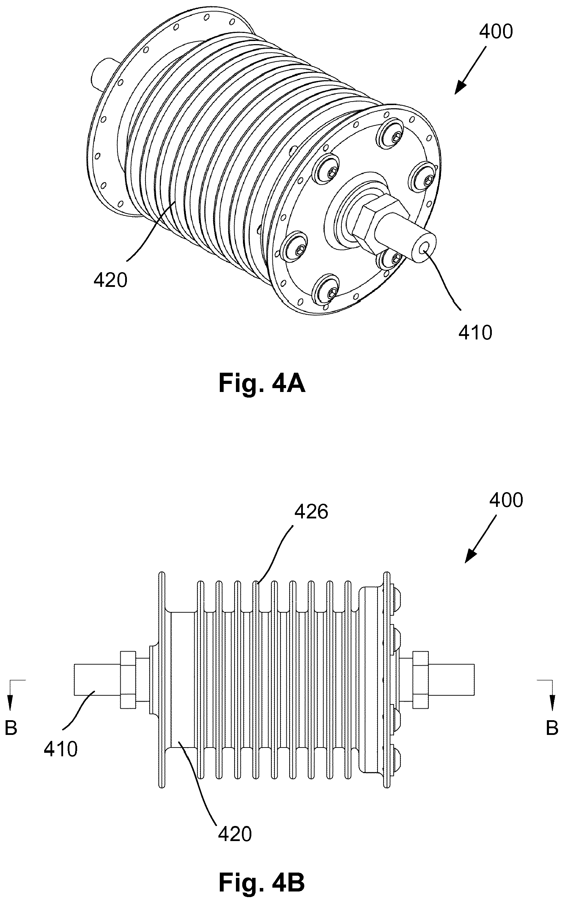

Referring now to Figures 4A to 4E, an example of "wet brake" hub 400 will now be described.

In this example, there is shown a wheel hub 400 having a hub body 420 which terminates in end flanges 422, 422' to which spokes of a wheel are attached in a conventional manner. The hub body 420 is enclosed and includes a plurality of external cooling fins 426 to assist in dissipating heat away from the hub during braking.

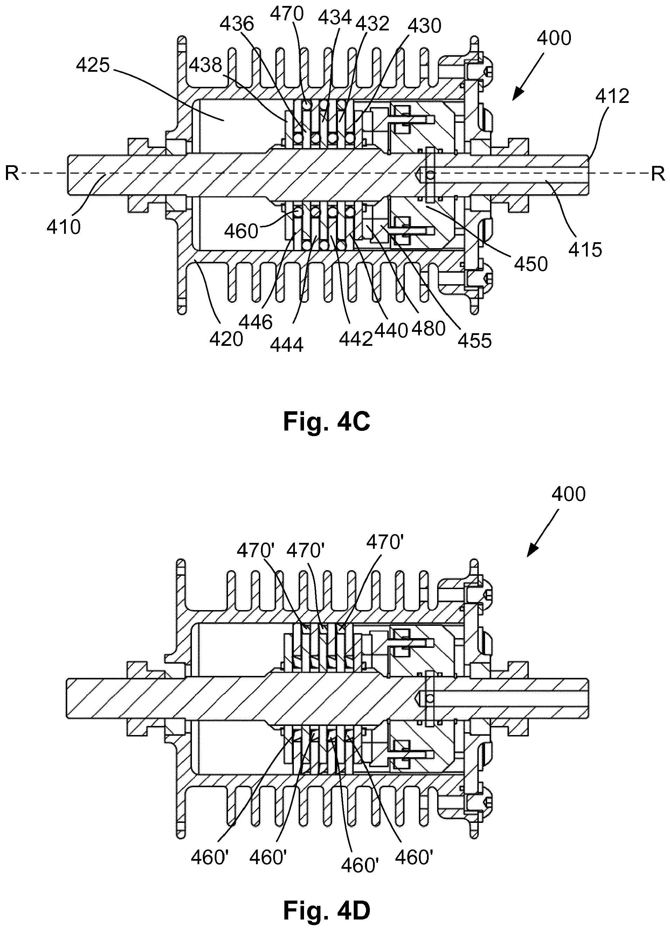

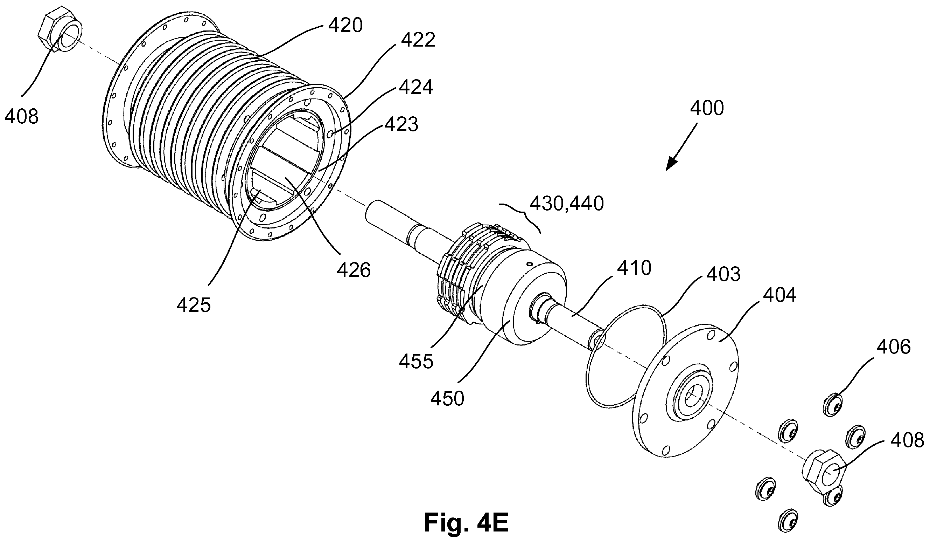

An axle 410 extends through the hub body 320 and defines an axis of rotation R for the wheel. The axle is secured by nuts 408 as shown in Figure 4E. The hub body 420 is rotatably coupled to the axle 410 and is supported by bearings (for example deep groove, doubled sealed) in a conventional manner. A multi-plate brake assembly is located inside a cavity 425 in the hub body 420 about the axle 410 as shown for example in Figure 4C. The multi-plate brake assembly comprises a plurality of friction plates 430, 432, 434, 436 interleaved between a plurality of pressure plates 440, 442, 444, 446, 448. The pressure plates are typically made from a metal such as steel (e.g. mild steel) or aluminium whilst the friction plates are typically a metallic, fibrous or organic friction material. The friction plates 430, 432, 434, 436 are rotatably fixed with respect to the hub body 420 so as to rotate therewith about the axis of rotation R. In this regard, the friction plates 430, 432, 434, 436 have a splined exterior which engages with an internal spline 426 provided in the hub body 320 as shown for example in Figure 4E. The hub body 420 therefore slidably receives the friction plates 430, 432, 434, 436 and allows them to slide freely relative to the hub body 420. In other examples, alternative grooved engagement means may be used to couple the friction plates to the hub body.

The pressure plates 440, 442, 444, 446, 448 are rotatably fixed with respect to the axle 410. This is achieved by a splined interior of the pressure plates 440, 442, 444, 446, 448 which cooperates with a splined exterior of at least a portion of the axle 410. In the example shown, the axle 410 includes an integral spline section 416 which slidably receives the plurality of pressure plates 440, 442, 444, 446, 448 and allows them to slide freely relative to the axle 410. In normal operation (when not braking) it will therefore be appreciated that the plurality of pressure plates 440, 442, 444, 446, 448 remain stationary whilst the plurality of friction plates 430, 432, 434, 436 rotate with the wheel hub 420 about the axis of rotation R. In other examples, alternative grooved engagement means may be used to couple the pressure plates to the axle.

The wheel hub 400 further includes an actuator in the form of an annular hydraulic cylinder and piston 450, 455 arrangement which is disposed about the axle 410. In use, hydraulic fluid is fed to the cylinder 450 via a passageway 415 formed in the axle 410 from a first end 412 thereof. A hydraulic line or cable (not shown) would be connected to the end 412 of the axle 410 to allow pressurized oil to flow into the cylinder 450 during braking. The cylinder is retained within the internal cavity 425 of the hub body 420 by a circlip 452 as shown in the exploded view of Figure 4E.

In operation, the annular piston 455 is movable within the cylinder to apply an axial load onto the multi-plate arrangement via a thermal insulator or barrier 480 in the form of a ceramic or alumina washer which assists in preventing heat transfer from the friction plates 430, 432, 434, 436 to the hydraulic cylinder 450. The ceramic washer 480 is urged across into the first pressure plate 430, which exerts a force onto first friction plate 340 and so on until the final friction plate 436 is urged towards the final pressure plate 448. Pressure plate 448 is restrained from moving during braking by a circlip or other end stop. As a result, the multi-plate arrangement is squeezed or compressed together to thereby bring the plates into frictional engagement. In the arrangement shown, eight friction surfaces are provided, each one respectively being at an interface between a pressure plate and a friction plate.

The frictional engagement between the plates generates friction and thereby converts kinetic energy of the friction plates 430, 432, 434, 436 into thermal or heat energy thereby braking the hub 400 and decelerating the wheel to which it is attached.

In Figure 4C, there is shown an example whereby each frictional plate 430, 432, 434, 436 is separated by an O-ring 470 and each pressure plate 440, 442, 444, 446, 448 is also separate by an O-ring 460. The O-rings 460, 470 provide a biasing force between the respective plates which keep them separated when the brake is released in normal operation. When the brake is applied, the respective plates are squeezed together and without any biasing members, when the brake is released, drag would slow the movement of the plates back across to their normal positions. This type of braking response is not desirable and the O-rings are therefore intended to provide sufficient biasing force to spring the plates quickly back across to their normal position after the brake is released.

As an alternative example, instead of O-rings, the brake assembly may employ spring washers (such as wave washers). An example of an arrangement where wave washers is used is shown in Figure 4D. Spring washers 460' separate the pressure plates 440, 442, 444, 446, 448 whilst spring washers 470' separate the friction plates 430, 432, 434, 436.

As shown in Figure 4E, the hub 400 further includes a removable end plate 404 which is seated in recess 423 formed in the end flange 422. The end plate 404 is secured to the hub body 420 by fasteners 406 (e.g. screw and washer) through apertures 424 in the recess 423. This arrangement permits the end plate 404 to be removed from the hub body 420 to provide access to the hydraulic cylinder and piston 450, 455 as well as the various pressure and friction plates. This enables servicing to be performed on the brake assembly without having to dismantle the wheel or remove the spokes.

In this example, at least part of the internal cavity 425 is filled with fluid such as a hydraulic fluid or other suitable cooling liquid so as to lubricate and cool the friction plates 430, 432, 434, 436 during braking. The cooling fluid is prevented from escaping by seal 403 between the hub body 420 and end plate 404. During braking, at least some of the heat generated from the friction plates is transferred to the cooling fluid which assists in transferring heat energy from inside the hub to outside the hub. This 'wet brake' example provides excellent thermal dissipation characteristics which enables consistent and reliable braking performance to be achieved particularly in applications with a high thermal braking load such as in long descents and downhill sections on a bicycle.

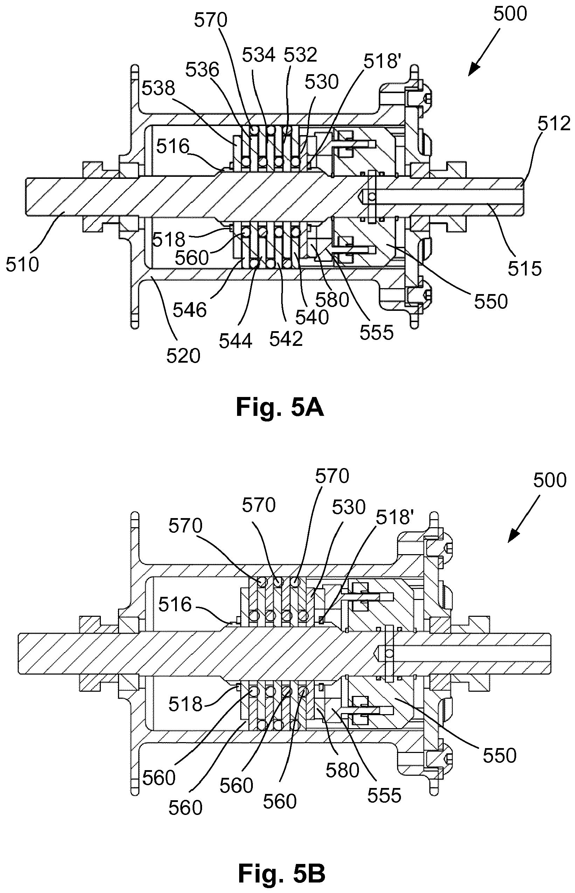

The operation of the brake will now be described in further detail with reference to Figures 5A and 5B which respectively show an example of the brake in 'released' and 'applied' positions.

In Figure 5A, the plurality of friction plates 530, 532, 534, 536 and steel pressure plates 540, 542, 544, 546, 548 are biased apart by the respective O-rings 560, 570 which separate each plate. The plates are retrained laterally about the axle by circlips or alternative end stops 518, 518' disposed about the axle spline 516 are opposing ends of the plate arrangement. When the brake is released, the O-rings act to bias the plates against the respective end stops.

When the brake is applied, pressurized hydraulic fluid enters the passageway 515 formed in the axle 510 from end 512 and is fed into the cylinder 550. The pressurized hydraulic fluid drives the annular piston 555 so that it extends away from the cylinder 555 a short stroke and applies an axial load to a ceramic or alumina thermal barrier 580 sandwiched between the plate stack and cylinder. An axial load is imparted to pressure plate 540 which frictionally engages with friction plate 530. Friction plate 530 bears against pressure plate 542 which frictionally engages with friction plate 532 and so on. The final friction plate 536 is urged towards final pressure plate 548 which cannot move laterally due to circlip or end stop 518'. This causes the plates to be squeezed together which increases the frictional engagement thereby braking the hub 500.

In the applied position as shown in Figure 5B, the piston 555 has extended pushing the various plates across which also compresses the O-rings 560, 570 disposed between the respective plates. As the brake is released again, the piston 555 retracts and the axial load acting on the plate stack is removed. The O-rings 560, 570 then release a spring load which biases the plates quickly back to their normal position, thereby minimising drag.

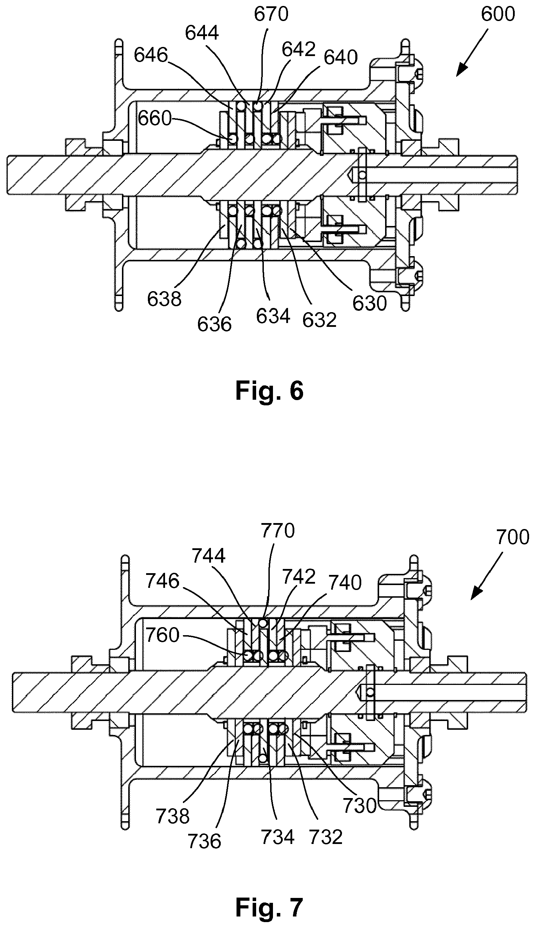

Referring now to Figures 6 to 8, there are shown examples of a wheel hub with alternative plate arrangements that vary the number of friction or braking surfaces provided.

In Figure 6, there is shown a hub 600 having friction plates 630, 632, 634, 636 and steel pressure plates 640, 642, 644, 646, 648. In this example, pressure plates 640, 642 are arranged together side by side adjacent to friction plates 630, 632 which are also arranged together side by side. The remaining friction plates 634, 636 are interleaved between the remaining pressure plates 644, 646, 648. In this arrangement, only six friction surfaces are provided (compared to eight in the previous example) using the same number of plates. Friction surfaces are provided at the interface between plates (630, 642), (632,644), (634, 644), (634,646), (636, 646) and (636, 648) respectively. O-rings (or steel washers) 660, 670 are provided to separate the respective friction and pressure plates as previously described. The only difference in this example is that a pair of O-rings 660 are disposed side by side between pressure plate 642 and pressure plate 644.

In Figure 7, there is shown a hub 700 having friction plates 730, 732, 734, 736 and steel pressure plates 740, 742, 744, 746, 748. In this example, pressure plates (740, 742) and (746, 748) are arranged together side by side adjacent to friction plates (730, 732), (734, 736) respectively that are also arranged together side by side. Pressure plate 744 is positioned between friction plate pairs (730, 732), (734, 736). In this arrangement, only four friction surfaces are provided using the same number of plates. Friction surfaces are provided at the interface between plates (730, 742), (732,744), (734, 744), (736,746) respectively. In this example, a pair of O-rings 760 are provided side by side to separate pressure plates 742, 744 and another pair of O-rings 760 are provided side by side to separate pressure plates 744, 746. A further O-ring 770 is provided to separate friction plates 742, 744.

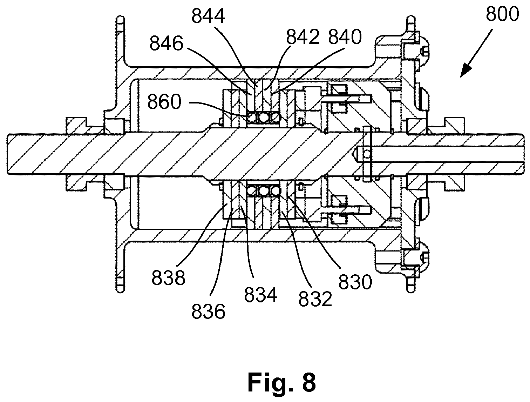

In Figure 8, there is shown a hub 800 having friction plates 830, 832, 834, 836 and steel pressure plates 840, 842, 844, 846, 848. In this example, pressure plates (840, 842) and (844, 846, 848) are arranged together side by side so as to sandwich friction plates (830, 832, 834, 846) that are also arranged together side by side. In this arrangement, only two friction surfaces are provided using the same number of plates. Friction surfaces are provided at the interface between plates (830, 842), (836,844) respectively. In this example, three O-rings 860 are provided side by side to separate pressure plates 842, 844.

In the above described plate arrangements, it is shown that by grouping the pressure and friction plates as desired, it is possible, using the same number of plates, to vary the number of friction or braking surfaces in the brake assembly. This enables the braking performance of the brake to be tuned as desired for example to increase or decrease the available braking power. Whilst the number of friction or braking surfaces can be varied using the same number of plates as described, in practice it is likely that the minimum number of plates required to achieve the desired number of friction surfaces would be used. For example, if four friction surfaces are required then a plate arrangement comprising two friction plates interleaved between three pressure plates could be used.

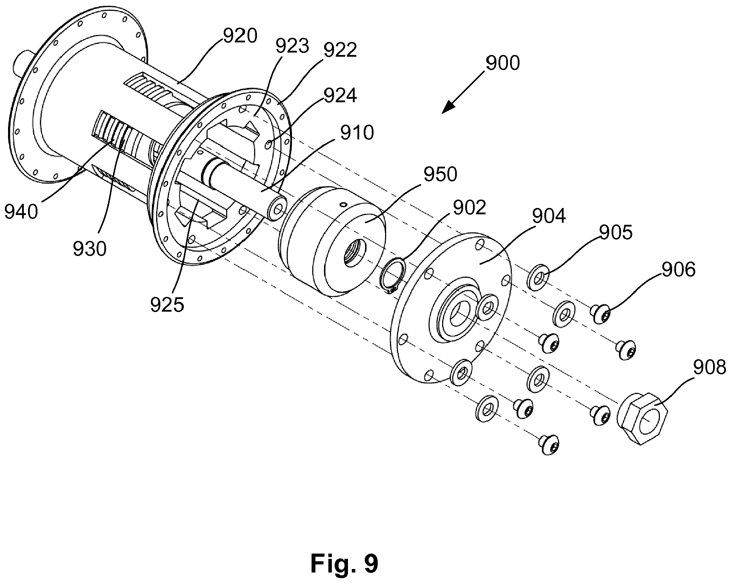

Referring now to Figure 9, disassembly of a hub brake 900 will now be described in further detail. To disassemble the hub brake 900, for example to service the brake assembly housed within the hub body 920, firstly the locking nut 908 is unscrewed from the axle 910. The removable end plate 904 can then be unscrewed by removing fasteners 905, 906 which secure the end plate 904 to the hub body 920. As previously described, the end plate 904 is seated in a recess 923 provided in end flange 922 and secured thereto by fasteners such as screws 906 which are inserted through apertures 924 in the recess 923. After the end cap 904 has been removed, access is provided to the hydraulic cylinder 950 which is retained in the hub body 920 by circlip 902. After the circlip 902 has been removed, the hydraulic cylinder and piston can be slidably removed from the axle 910 along with the ceramic thermal barrier washer. Access is then provided to the multi-plate brake assembly which can also be slidably removed via the disassembled end of the hub 900. This arrangement enables the hydraulic and brake components to be removed for service and/or replacement without needing to disassemble the wheel or remove any spokes which is advantageous from the perspective of a bike mechanic.

Accordingly, it will be appreciated that in at least one example the above described wheel hub provides an integrated braking system for a vehicle such as a bicycle which is a useful and safer alternative to known disc brakes currently in use. The integrated hub brake houses the braking components internally so that there are no exposed rotating parts which can cause injury. In at least the examples of an enclosed hub, the brake components are not exposed to water, dust or dirt entry which is likely to increase the performance of the braking system, minimise maintenance required increase longevity of the parts. The system also removes the need for traditional calipers found on most rim and disc brakes which provides an aerodynamic benefit and permits greater aerodynamic design freedom for the front fork. Wheel life is also maximised as brake friction wear on wheel rims is eliminated and lighter wheel rims can be achieved as a result.

Throughout this specification and claims which follow, unless the context requires otherwise, the word "comprise", and variations such as "comprises" or "comprising", will be understood to imply the inclusion of a stated integer or group of integers or steps but not the exclusion of any other integer or group of integers.

Persons skilled in the art will appreciate that numerous variations and modifications will become apparent. All such variations and modifications which become apparent to persons skilled in the art, should be considered to fall within the spirit and scope that the invention broadly appearing before described.

## Claims

1. A wheel hub for a vehicle, including:
a) a wheel axle defining an axis of rotation for the wheel;
b) a hub body rotatably coupled to the axle for rotation about the axis of rotation, the hub body defining an internal cavity; and,
c) a braking assembly, including:
i) at least one first annular plate disposed within the internal cavity about the axle, the at least one first annular plate rotatably fixed with respect to the hub body so as to rotate therewith about the axis of rotation;
ii) at least one second annular plate disposed within the internal cavity about the axle and adjacent to the at least one first annular plate, the at least one second annular plate rotatably fixed with respect to the axle, and at least one of the first and second annular plates being slidably movable within at least part of the internal cavity; and,
iii) an actuator disposed within the internal cavity and configured in use, to cause an axial load to be applied to the slidably movable plate to thereby cause the at least one first and second annular plates to frictionally engage thereby applying a braking load between the hub body and wheel axle so as to brake the wheel of the vehicle.

2. The wheel hub according to claim 1, wherein the wheel hub includes a plurality of first annular plates interleaved with a plurality of second annular plates that are brought into frictional engagement during braking.

3. The wheel hub according to claim 1 or claim 2, wherein there are 'n' first annular plates and 'n+1' second annular plates.

4. The wheel hub according to claim 2 or claim 3, wherein at least one of:
a) at least one of the plurality of first or second annular plates are separated by one or more biasing members; and,
b) each of the plurality of first annular plates are separated by biasing members and each of the plurality of second annular plates are separated by biasing members,
wherein, the or each biasing member is an O-ring or spring washer.

5. The wheel hub according to any one of the preceding claims, wherein the at least one first annular plate has a grooved exterior for cooperation with one of:
a) a splined interior of the hub body; and,
b) a plurality of circumferentially spaced apart slots extending from a first end of the hub body in a direction of elongation thereof.

6. The wheel hub according to any one of the preceding claims, wherein the at least one second annular plate has a grooved interior for cooperation with a splined exterior of at least a portion of the axle.

7. The wheel hub according to any one of the preceding claims, wherein the actuator is an annular hydraulic cylinder and piston arrangement disposed about the axle.

8. The wheel hub according to claim 7, wherein the axle defines an internal passageway extending from a first end thereof along a direction of elongation of the axle, the passageway providing a conduit for the flow of hydraulic fluid into the cylinder.

9. The wheel hub according to any one of the preceding claims, wherein the hub body is one of:
a) open permitting the hub to be air cooled so as to dissipate heat generated during braking; and,
b) enclosed and at least one of:
i) at least partially filled with fluid so as to dissipate heat generated during braking; and,
ii) having a plurality of cooling fins.

10. The wheel hub according to any one of the preceding claims, wherein the wheel hub further includes:
a) an annular flange at a first end of the hub body to which spokes of the wheel are attached; and,
b) an end plate disposed about the axle and removably secured to the annular flange, the end plate removable to provide access to the internal cavity.

11. The wheel hub according to claim 10, wherein the end plate is seated in a recess provided in the annular flange.

12. The wheel hub according to any one of the preceding claims, wherein the wheel hub further includes a third annular plate arranged between the actuator and slidably movable plate, the third annular plate acting as a thermal insulator.

13. The wheel hub according to any one of the preceding claims, wherein the at least one first annular plate is a friction plate providing at least one friction surface made from a metallic, fibrous or organic material.

14. The wheel hub according to any one of the preceding claims, wherein the at least one second annular plate is a pressure plate made from a metallic material.

15. The wheel hub according to any one of the preceding claims for use with at least one of:
a) a front wheel of the vehicle; and,
b) a rear wheel of the vehicle,
wherein, the vehicle is one of a bicycle, a tricycle and a motorcycle.
